(19) Europäisches Patentamt
European Patent Office
Office européen des brevets

(11) **EP 1 483 951 B1**

(12) **EUROPÄISCHE PATENTSCHRIFT**

(45) Veröffentlichungstag und Bekanntmachung des Hinweises auf die Patenterteilung:
**11.07.2007   Patentblatt 2007/28**

(51) Int Cl.:
*A01B 79/00* (2006.01)          *A01C 17/00* (2006.01)
*A01G 7/00* (2006.01)          *G01N 21/31* (2006.01)

(21) Anmeldenummer: **04011649.3**

(22) Anmeldetag: **17.05.2004**

(54) **Verfahren und Einrichtung zum Bestimmen des Düngebedarfs in Gärten**

Method and apparatus for determining fertilizer requirements in gardens

Procédé et appareil pour déterminer la demande d'engrais dans les jardins

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.06.2003   DE 10325534**

(43) Veröffentlichungstag der Anmeldung:
**08.12.2004   Patentblatt 2004/50**

(73) Patentinhaber: **Deutsches Zentrum für Luft- und Raumfahrt e.V.**
**51147 Köln (DE)**

(72) Erfinder:
• **Tank, Volker  Dr**
  **82279 Eching (DE)**
• **Haschberger, Peter Dr**
  **82131 Gauting (DE)**
• **Schulz, Jürgen Dr.**
  **82152 Planegg (DE)**

(74) Vertreter: **von Kirschbaum, Albrecht**
**Patentanwalt**
**Postfach 1520**
**82102 Germering (DE)**

(56) Entgegenhaltungen:
DE-A- 4 427 438          DE-A- 10 148 746
DE-A- 10 148 747          DE-A- 10 148 748
DE-A- 19 723 770          DE-A- 19 950 396
DE-C- 10 002 880          US-A- 5 130 545

**Beschreibung**

Die Erfindung betrifft Verfahren zum Bestimmen des Düngebedarfs in Gärten, Gärtnereien, Parkanlagen, u.ä. sowie Einrichtungen zum Durchführen der Verfahren.

Das Düngen von Privatgärten, insbesondere der meist verhältnismäßig großen Rasenflächen erfolgt in aller Regel ohne spezielle Fachkenntnisse. Zur zuverlässigen Beurteilung der benötigten Düngermenge fehlt sowohl eine fachliche Anleitung als auch im allgemeinen die notwendige Erfahrung. Regelmäßig wird Kunstdünger in viel zu großen Mengen ausgebracht, unter dem Motto: "Viel hilft viel".

Zu hohe Düngerkonzentrationen im Boden schaden der Mikrofauna und verringern die Bodenvitalität. Die überschüssigen Düngermengen sickern mit dem Regen ins Grundwasser und gelangen über das daraus gewonnene Trinkwasser in die Nahrungskette. Sie gelangen ferner in Bäche, Flüsse und Seen und stören dort das biologische Gleichgewicht. Dies wird als nachteilige Folge der beschriebenen Düngepraxis angesehen. Ferner ist die Überdüngung als nicht ökonomisch und als Verschwendung anzusehen.

Durch Bodenanalysen könnten die notwendigen Düngermengen bestimmt werden; dies ist aber aufwendig und teuer und wird deshalb nicht in großem Stil angewandt. Nachteilig daran ist ferner, dass die Analyse nicht unmittelbar vor Ort vorgenommen werden kann und auch zeitlich aufwendig ist.

Für Forschungszwecke gibt es Verfahren, um aus Messungen der Fluoreszenz von Chlorophyll verschiedene Vitalitätsparameter von Pflanzen, beispielsweise deren Ernährungszustand abzuleiten. Auch diese Methoden sind aufwendig, teuer und zu komplex für eine Anwendung durch nicht qualifiziertes Personal.

Inzwischen sind einfacher zu bedienende Messsysteme in der Entwicklung, die aus der Fluoreszenzmessung die für eine Düngung erforderliche Stickstoffdüngermenge ableiten. Diese Geräte sind jedoch für den Einsatz in der Landwirtschaft und den automatisierten Betrieb am Traktor konzipiert, sind relativ groß, schwer und teuer und daher für den Einsatz in Privatgärten ungeeignet.

Besonders nachteilig bei allen derartigen Fluoreszenzmessgeräten ist, dass Fluoreszenz durch starke Strahlungsquellen angeregt werden muss, die teilweise hohe elektrische Leistung erfordern (Blitzlampen), in jedem Fall aber technisch sehr aufwendig sind (Laser, Laserdioden). Allein schon die notwendige elektrische Versorgung erschwert die Verwendung als kleines, handliches und mobiles Gerät.

Ferner ist nachteilig, dass mit bekannten Geräten aus energetischen Gründen meist eine Punktmessung an einem kleinen Messfleck auf nur einem Blatt durchgeführt wird. Diese Messung ist jedoch nicht repräsentativ für die Pflanze und schon gar nicht für eine Fläche oder einen Bestand.

In DE 197 23 770 A1 ist eine Pflanzenzustandsmessvorrichtung für die Erfassung des Pflanzenzustands beschrieben, welche eine Strahlungsquelle aufweist, die beispielsweise Halogenlicht oder Xenonlicht sein kann, oder eine Laserstrahlungsquelle ist. Diese Strahlungsquelle ist auf den zu messenden Pflanzenbestand gerichtet, so dass dieser bei Tageslicht zum einen vom Sonnenlicht und zum anderen von der Strahlungsquelle bestrahlt wird. Diese Bestrahlung wird von einem optischen Sensor aufgenommen und zur Verarbeitung weitergeleitet. Ferner ist die Strahlungsquelle in ihrer Strahlungsintensität einstellbar, um beispielsweise die Intensität bei stark schwankenden natürlichen Lichtverhältnissen zu erhöhen und beispielsweise bei nahezu gleichbleibenden Verhältnissen zu reduzieren, um den Energiebedarf zu senken.

Ferner kann bei dieser Messvorrichtung eine Abdeckhaube verwendet werden, die den zu messenden Pflanzenbestandteil zumindest teilweise abdeckt und dadurch den Einfluss des natürlichen Lichts auf die jeweiligen Messungen minimiert. Innerhalb der Abdeckhaube erfolgt dann ein Anstrahlen des Messpflanzenbestandes durch die Strahlungsquelle. Über den Sensor werden die von dem Pflanzenbestandteil abgegebene Strahlung aufgenommen und gemessen. Hierbei kann es sich um die Messung der Reflexion oder um die Messung der Fluoreszenz des Pflanzenbestandes oder sonstige optische Parameter handeln.

Nachteilig bei dieser Messvorrichtung ist jedoch vor allem, dass auf jeden Fall eine künstliche Strahlungsquelle eingesetzt werden muss, und dass nur eine teilweise lichtmindernde Abdeckung und keine vollständige Abdunklung des zu messenden Pflanzenbestandteils erfolgt.

In DE 44 46 481 A1 ist ein Mess- und Steuerungssystem zum Erkennen von Pflanzen zur schadstofffreien Feldbearbeitung und Unkrautbekämpfung beschrieben, bei welchen die Spektrallinien von Pflanzen erkannt und in Echtzeit mit abgespeicherten und gelernten Werten verglichen werden. Darüber hinaus ist dieses System an ein Rechnersystem mit Datenbank angeschlossen, in welchem Referenzwerte gespeichert sind.

Aus DE 199 50 396 A1 ist eine Vorrichtung zum Bestimmen des Pflanzenzustands angegeben, bei welcher künstliche Lichtquellen, insbesondere Luminiszenz- und/oder Laserdioden zum gerichteten Beleuchten des zu messenden Pflanzenbestandes vorgesehen sind. Ferner wird eine Signalverarbeitungseinrichtung eingesetzt, die einen die Reflexionsdaten auswertenden, den Pflanzenbestand bestimmenden Mikroprozessor aufweist. Die künstlichen Messquellen sind an einem Messkopf so angeordnet, dass der zu messende Pflanzenbestand mit einem Lichtfleck oder -streifen aus Licht von mindestens zwei Gruppendioden mit ausgewählter Wellenlänge beleuchtet wird, um den Pflanzenbestand zu bestimmen.

Ferner weist der Messkopf eine Vielzahl von ein scheinwerferähnliches Leuchtfeld bildenden, dicht nebeneinander angeordneten lichtstarken Dioden auf, die mindestens zwei Typen bzw. Gruppen der Dioden jeweils einer Wellenlänge enthalten. Mittels Photodetektoren werden nacheinander das reine Hintergrundsignal und das Summensignal aus Lichtquelle (Dioden) und natürlicher Bestrahlung aufgenommen. Durch Differenzbildung lässt sich dann das reine von den Dioden abgegebene Signal ermitteln. Eine Messung der reflektierten Strahlung erfolgt synchron jeweils bei einer an- oder abgeschalteten Lichtquelle. Besonders nachteilig bei dieser Vorrichtung ist die Tatsache, dass das künstliche Beleuchten des zu messenden Pflanzenbestands nur sehr aufwendig durchzuführen ist und hierzu hohe Energiekosten verursachende lichtstarke Dioden eingesetzt werden müssen.

In DE 101 48 746 A1 sind ein Verfahren und eine Vorrichtung zum berührungslosen Bestimmen und Beeinflussen des Pflanzenzustands angegeben, wobei die Pflanzen mit einer modulierten künstlichen Lichtquelle aus Halogen- oder Xenonlicht durch einen Lichtfleck oder -streifen beleuchtet werden. Die hierbei erhaltenen Reflexionssignale des Blattwerks der Pflanzen werden im sichtbaren und/oder nahinfraroten Spektralbereich durch Detektoren erfasst und an eine Auswerteeinheit weitergegeben. Sowohl bei dem Verfahren als auch bei der Vorrichtung ist eine ausreichend starke Lichtquelle Voraussetzung, um von einer hinreichend großen Pflanzenfläche digital verarbeitbare Reflexions- und Fluoreszenzsignale des Pflanzenbestands zu erhalten. Obendrein muss ein spezielles Filter empfangsseitig eingesetzt werden, das nur gewünschte Fluoreszenz-Emissionswellenlängen passieren lässt. Auch bei dieser Vorrichtung wird zur Durchführung des Verfahrens eine einen hohen Energiebedarf erfordernde starke Lichtquelle eingesetzt.

Aus DE 198 60 306 A1 sind ein Verfahren und eine Vorrichtung zum teilflächenspezifischen Düngen von Pflanzen bekannt, wobei unter natürlicher Beleuchtung während der Düngerausbringung durch reflexionsoptische Messungen im sichtbaren und nahe infraroten Spektralbereich mittels Sensoren der Chlorophyllgehalt der Pflanzen festgestellt, angezeigt und daraus das Maß für deren Ernährungszustand bestimmt wird. Hierbei wird die Reflexionsmessung als Schrägmessung zum Nadir gleichzeitig in gegeneinander gerichteten Messrichtungen schattenfrei mit Lichtleitern ausgeführt und der Einfluss des solaren Azimutwinkels durch Mittelung des Störsignals aus allen Messrichtung eliminiert. Bei der Schrägmessung ist zusätzlich eine künstliche Beleuchtung zweckmäßig.

In DE 100 02 880 C1 sind ein Verfahren und eine Vorrichtung zum Kontrollieren und Beeinflussen des Pflanzenzustands durch Pflanzenzustandsinformationen beschrieben, um insbesondere das bedarfsgerechte und teilflächenspezifische Ausbringen und Verteilen von Pflanzenbehandlungsmitteln sowie Wasser entsprechend zu steuern. Hierzu werden die Pflanzen direkt (aktiv) und indirekt (passiv) beleuchtet, wodurch Reflexions- und Fluoreszenzspektren erzeugt werden, deren Signale in Mikroprozessoren verarbeitet und mit in einem Mikroprozessor abgelegtem Referenzspektrum der gesunden Pflanze verglichen werden. Es wird also ein passives Beleuchten mehrerer Pflanzen eines Pflanzenbestandes mittels Sonnenlicht und ein aktives Beleuchten mehrerer Pflanzen durch Leuchtdiodencluster oder Laser als Lichtquelle mit unterschiedlichen Wellenlängen zum Erzeugen von Reflexions- und Fluoreszenzspektren eingesetzt.

In DE 44 27 438 A1 ist ein Verfahren zur Charakterisierung des Photosynthesesystems von Pflanzen beschrieben, bei welchem die Pflanzen nach einer Dunkelphase, welche kürzer als 1s ist, mit einem rechteckförmigen Lichtimpuls von einem Laser und somit künstlich bestrahlt werden. Hierbei liegt die Impulsdauer des Lichtimpulses zwischen 1 und 30ms. Das Messintervall zum Erfassen der Fluoreszenz beginnt bereits in der Dunkelphase, wobei jedoch die Fluoreszenz zeitaufgelöst mit einer Zeitkonstanten von höchsten 0,5ms erfasst wird. Auch bei diesem Verfahren wird nach einer sehr kurzen Dunkelphase mittels einer künstlichen Lichtquelle, nämlich einem Laser eine Bestrahlung durchgeführt, um dann die dadurch angeregte Fluoreszenz zu messen.

Aus US-A-5 130 545 ist eine Einrichtung mit einem Behälter bekannt, der Umgebungslicht blockiert, um Fluoreszenzemissionen von Pflanzen mit Hilfe einer Blaulichtquelle zu messen. Ferner weist die Einrichtung ein Meßsystem sowie eine Steuer- und Rechenschaltung auf.

Aufgabe der Erfindung ist es, Verfahren anzugeben, mit welchen tatsächlich benötigte Düngermengen in Privatgärten, Gärtnereien u.ä. bestimmt werden können, sowie eine Vorrichtung zur Durchführung der Verfahren anzugeben, welche klein, handlich und kostengünstig herzustellen ist, und bei geringer elektrischer Leistung schnell arbeitet.

Diese Aufgabe ist bei einem Verfahren zum Bestimmen des Düngerbedarfs in Gärten, Gärtnereien, Parkanlagen, u.ä. durch die Merkmale im kennzeichnenden Teil des Anspruchs 1 gelöst. Ferner ist gemäß der Erfindung eine Vorrichtung zur Durchführung des Verfahrens mit den Merkmalen im kennzeichnenden Teil des Anspruchs 3 angegeben. Vorteilhafte Weiterbildungen der erfindungsgemäßen Vorrichtung sind Gegenstand der Ansprüche 4 bis 17.

Bei Einsatz des erfindungsgemäßen Verfahrens in Verbindung mit der erfindungsgemäßen Vorrichtung ist somit eine optimale Düngung in Privatgärten, Gärtnereien, u.ä. ermöglicht, wodurch Böden, Grundwasser und Ressourcen geschont werden. Obendrein steht gemäß der Erfindung schnell und unmittelbar am Ort einer Fluoreszenzmessung ein Untersuchungsergebnis zur Verfügung, das repräsentativ für eine Pflanze/n, Pflanzenteile oder eine kleine Pflanzengruppe ist.

Das erfindungsgemäße Verfahren und die erfindungsgemäße Vorrichtung können außer in Gärten auch in Gärtnereien bei Salat-, Gemüse- und Blumenpflanzen sowie in Sport-, Park- und Golfanlagen in vorteilhafter Weise eingesetzt werden.

Bei der Erfindung ist von der Überlegung ausgegangen, dass die Effizienz der photosynthetischen Systeme von Pflanzen Rückschlüsse auf deren Ernährungszustand erlaubt. Wird ein Photon von einem Photosynthesesystem absorbiert, so kann die nachfolgende Reaktion auf drei Arten ablaufen: Die absorbierte Energie wird für die Photosynthese verwendet, sie wird in Wärme umgewandelt oder sie wird bei höherer Wellenlänge als Fluoreszenzlicht wieder abgestrahlt.

Ist die Photosynthese gestört (die Photonenabsorption aber nicht), so wird die Umwandlung in Wärme und Fluoreszenz auf Kosten der Photosynthese zunehmen. Das Fluoreszenzlicht ist messbar und aus einer solchen Messung lassen sich Aussagen über die Photosynthese ableiten.

Eine reduzierte Photosynthese kann ihre Ursache in einem Mangel an Nährstoffen oder Spurenelementen haben; dann ist eine Düngung in Abhängigkeit vom Grad der Störung zu empfehlen. Ergibt die Fluoreszenzmessung, dass die Photosynthese nicht durch Nahrungsmangel gestört ist, kann eine Düngung unterbleiben.

Fluoreszenz tritt in zwei Spektralbändern auf, nämlich im roten Spektralband zwischen Wellenlängen von 650 und 850nm (Chlorophyll, Maxima bei 690nm, 740nm) und im blauen/grünen Spektralband bei Wellenlängen zwischen 350 und 600nm (phenolische Substanzen, Maxima bei 440nm, 540nm).

Der Zustand des Photosynthesesystems lässt sich auf zwei unterschiedliche Arten bestimmen, nämlich durch Messungen im stationären Zustand oder durch Messungen im dynamischen Zustand:

Messung im stationären Zustand:

Die Pflanze ist konstanter Beleuchtung ausgesetzt. Es werden Spektren bzw. Strahlungsleistung in den Bereichen um 690nm und 740nm gemessen. Aus den Messungen wird das Verhältnis der Leistungen in den Maxima der Strahldichte der Fluoreszenz gebildet, (nämlich F690/F740 oder F685/F730 bzw. F690/F735 je nach Literaturquelle; zur Vereinfachung der nachstehenden Ausführungen wird für das Verhältnis der Leistungen im hellroten (hr) zu denjenigen im dunkelroten (dr) Bereich die Bezeichnung Fhr/Fdr eingeführt.) Hierbei gilt: Je größer das Verhältnis, desto geringer die Chlorophyllkonzentration. Dies wird als Hinweis auf eine vorliegende Unterversorgung der Pflanze gewertet und es wird eine Empfehlung zur Düngung ausgegeben. Hierbei ist das Verhältnis pflanzenspezifisch.

Ferner werden Kalibrierdaten für die interessierenden Pflanzen (Gras, etc.) durch Messreihen unter kontrollierter Düngemenge gewonnen. Die Kalibrierdaten sind in einem Prozessor gespeichert. Über bekannte Eingabemöglichkeit wird im Betrieb die betrachtete Pflanzenart ausgewählt und die entsprechenden Kalibrierdaten werden eingegeben.

Messung im dynamischen Zustand (Kautsky-Effekt):

Pflanzen/teile sind an Dunkelheit adaptiert und werden zu Beginn einer Messung schlagartig Strahlung ausgesetzt, die stark genug ist und die geeignete spektrale Verteilung aufweist, um Photosynthese anzuregen (ca. 100 W/m$^2$ bis ca. 1000 W/m$^2$ PAR, Photosynthetically Active Radiation). In kürzeren Zeitabständen (Millisekunden) werden über einen Zeitabschnitt von einigen Sekunden jeweils die maximalen Fluoreszenzwerte gemessen. Die Strahlung darf nicht so stark sein, dass die Pflanze geschädigt werden könnte; es muss aktinisches Licht sein.

Der Verlauf der auf diesen Strahlungssprung folgenden Fluoreszenz wird in Zeitabschnitten von Sekunden während eines Zeitabschnitts von einigen Minuten (etwa 1,5 bis 5 Min.) aufgezeichnet. Es wird das Verhältnis der maximalen Fluoreszenzstrahldichte (unmittelbar nach Einschalten der Bestrahlung) zum stationären Wert nach dem Einschwingen gebildet, was mit RFD (Ratio of Fluorescence Decrease) bezeichnet wird. Ein Verhältnis nahe 1 ergibt sich bei gestörter Photosynthese, ein größeres Verhältnis ergibt sich bei intakter Photosynthese. Zur Messung des Maximums ist eine zeitliche Auflösung in Millisekunden (ms) erforderlich; das nachfolgende Abklingen zum Gleichgewichtszustand kann in Sekundenschritten aufgenommen werden. Auch hier werden Kalibrierdaten zur Auswertung verwendet, die über systematische, pflanzenspezifische Messungen gewonnen werden.

Gemäß der Erfindung kann sowohl eine Messung im dynamischen als auch eine Messung im stationären Zustand, oder auch eine Kombination der beiden Messungen durchgeführt werden; d.h. es werden beide Messungen durchgeführt und die beiden Ergebnisse werden zur Beurteilung des Zustands der Pflanze/n herangezogen. Dabei werden für die dynamische Messung die zu untersuchenden Pflanzen zunächst eine ausreichende Zeit (z.B. 15 bis 20 Min.) mittels einer kleinen Probenkammer abgedunkelt, um sie an den Dunkelzustand zu adaptieren. Anschließend werden sie schlagartig beleuchtet. Die Beleuchtung bleibt dann während der mehrere Minuten dauernden Messung der Fluoreszenz bestehen.

Gemessen wird im Bereich der roten Fluoreszenz (690 bis 740nm) bzw. in zwei Spektralkanälen bei 690nm und bei 740nm. Aus den Messungen werden die Verhältnisse RFD, bzw. Fhr/Fdr gebildet und daraus wird eine Düngeempfehlung abgeleitet. Alternativ hierzu kann die Kautsky-Kinetik in einem einzigen, relativ breiten Kanal (670nm - ca. 750nm) erfasst werden. Dann wird zur Detektion nur ein Detektor verwendet, der wegen des breiten Kanals relativ geringe Empfindlichkeit aufweisen kann.

Gemäß der Erfindung wird die natürliche Sonnenstrahlung zur Anregung von Fluoreszenz genutzt.

Dadurch entfällt der bei bekannten Messsystemen notwendige Aufwand für Strahlungsquellen und deren Versorgung mit elektrischer Energie. Die Strahlung wird den Pflanzen in einer Probenkammer über ein optisches Filter zugeführt, welches keine Sonnenstrahlung im Spektralbereich der roten Fluoreszenz durchlässt. Damit ist verhindert, dass Sonnenstrahlung in diesem Spektralbereich in die Probenkammer gelangt, an den Pflanzen und Kammerwänden reflektiert wird und sich als störender Beitrag der zu messenden Fluoreszenzstrahlung überlagert. Die Vorrichtung zur Abdunklung der Pflanzen ist so gestaltet/dimensioniert, dass möglichst immer eine größere Zahl von Blättern erfasst wird bzw. werden kann.

Die anschließende Beleuchtung erfolgt mit aktinischer PAR, so dass möglichst alle Blätter dem gefilterten Licht ausgesetzt sind. Zur Erfassung der Fluoreszenzstrahlung werden optische Komponenten verwendet, die über große Aperturen und weite Öffnungswinkel verfügen. Die Messung der Strahlung erfolgt durch selektive Detektion in den jeweils benötigten Spektralkanälen, rot bzw. hellrot und dunkelrot und ist so gestaltet, dass sowohl der Kautsky-Effekt als auch die statische Fluoreszenz ausgewertet werden können.

In Abwandlung der vorstehend beschriebenen Verfahren kann beispielsweise der Kautsky-Effekt auch in den beiden Spektralkanälen hellrot (hr) und dunkelrot (dr) getrennt ausgewertet werden. Gemäß der Erfindung ist ein Mikroprozessor zum Steuern der Messung, Durchführen der Messdatenauswertung und Darstellen der Düngeempfehlung auf einer Anzeigeeinheit vorgesehen. Ferner ist ein Referenzstrahlungssensor vorgesehen, der die in die Probenkammer einfallende Strahlung erfasst und aufzeichnet. Schwankt deren Leistung während der Messzeit, so werden auf die Referenzmessung gestützte Korrekturen durchgeführt.

Nachfolgend wird die Erfindung anhand der Zeichnungen im einzelnen näher erläutert. Es zeigen:

Fig.1    eine Schnittansicht und

Fig.2    eine Draufsicht einer bevorzugten Ausführungsform der erfindungsgemäßen Vorrichtung;

Fig.3    Transmissionskurven optischer Kurzpassfilter, und

Fig.4    eine Detaildarstellung einer Messeinheit.

Der sequentielle Ablauf der einzelnen Verfahrensschritte zum Messen von Fluoreszenz und zum Bestimmen des Bedarfs an Dünger ist folgender:

a) Abdunkeln von Pflanzen/teilen;
b) Schließen eines Fensters für etwa 15 Min;
c) Messen der dunkeladaptierten Fluoreszenz;
d) Unmittelbar nach Öffnen des Fensters Messen der maximalen Fluoreszenz in Millisekunden-Schritten für einige Sekunden;

e) Messen der Fluoreszenz beim Übergang zum Gleichgewichtszustand (helladaptiert) in Sekunden-Schritten für einige Minuten;
f) Nach Abschluss der Messung Auswerten unter Bezugnahme auf vorher gespeicherte planzenspezifische Kalibrierdaten;
g) Berechnen einer Düngeempfehlung, und
h) Anzeigen der Düngeempfehlung.

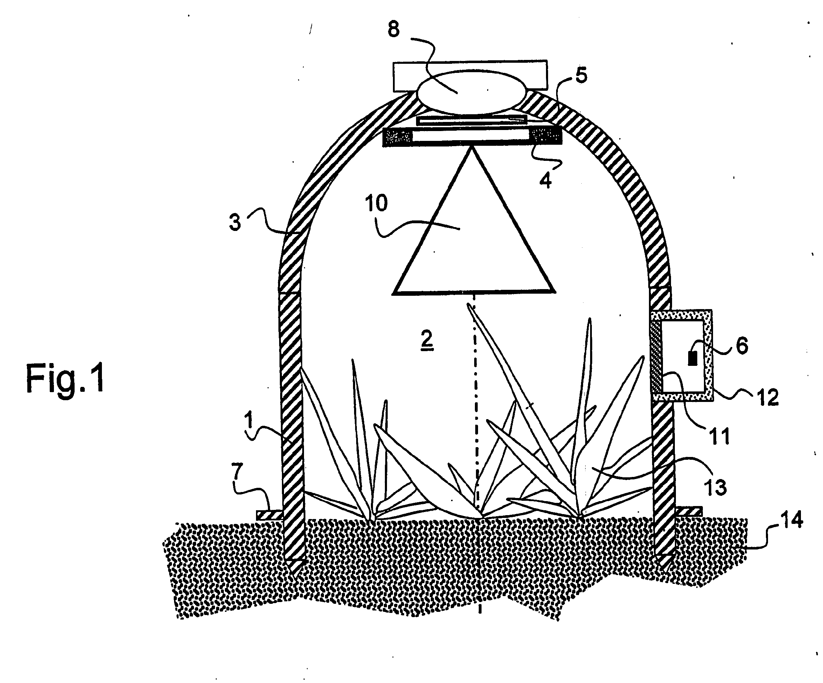

Eine bevorzugte Ausführungsform einer Vorrichtung zum Durchführen eines der erfindungsgemäßen Verfahren ist in einer schematischen Schnittansicht in Fig.1 dargestellt. Ein Messkopf weist die Form eines kreiszylinderförmigen, nach unten offenen Rohrs 1 aus Metall oder schlagfestem Kunststoff auf, das (nach oben) an einem Ende durch eine halbkugelförmige Kuppel 3 abgeschlossen ist. Hierdurch ist eine Probenkammer 2 gebildet. Die für Kuppel 3 und Rohr 1 verwendeten Materialien sind im Spektralbereich des Sonnenlichts (UV bis IR) strahlungsundurchlässig. Bei der in Fig.1 schematisch wiedergegebenen Ausführungsform ist im Zenith der Kuppel 3 eine Öffnung vorgesehen, die mittels eines Verschlusses 4, beispielsweise in der Art eines Kameraverschlusses sehr schnell, d.h. im Bereich von Millisekunden, geöffnet und geschlossen werden kann. Auf diese Weise kann die Probenkammer 2 abgedunkelt bzw. zur Anregung der Fluoreszenz mit Sonnenlicht geflutet werden.

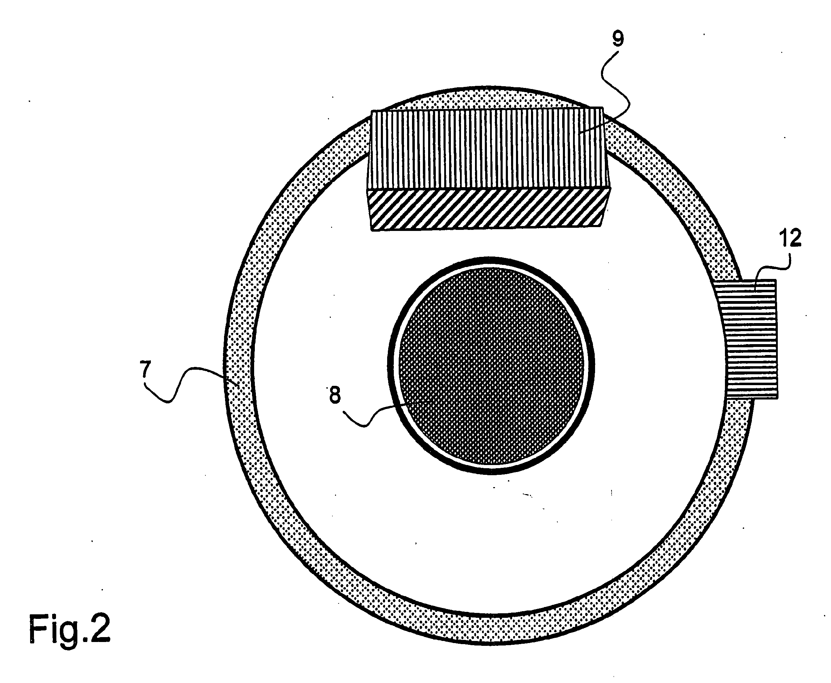

Dem Verschluss 4 ist ein Filter 5 vorgeschaltet, das nur Strahlung von Wellenlängen durchlässt, die kürzer als 670nm sind. Insbesondere lässt das Filter 5 keine Strahlung im Bereich der Rot-Fluoreszenz (ca. 670nm bis ca. 850nm) durch. Damit der Strahlungseintritt in die Probenkammer 2 nicht behindert wird und die Fluoreszenzstrahlung ungestört erfasst werden kann, ist an einer geeigneten Stelle (Fig.2) eine optische Messeinheit 9 mit Filter, Sammeloptik und Sensorik zur Strahlungsmessung vorgesehen.

Die Wandung des zylinderförmigen Rohrs 1 des Messkopfs läuft an seinem offenen Ende spitz zu und hat einen außen umlaufenden kreisringförmigen Ansatz/Bund 7, der als eine Art Anschlag beim Eindrücken des zylindrischen Rohrs 1 in den Erdboden 14 dient. Zu untersuchende Pflanzen 13 befinden sich während eines Messvorgangs in der Probekammer 2, wobei das zylinderförmige Rohr 1 einige Zentimeter in den Erdboden 14 hineingedrückt ist, so dass in ihm bei geschlossenem Verschluss vollkommene Dunkelheit herrscht. Das Rohr 1 mit der Kuppel 3 des Messkopfs ist auf seiner Außenseite mit einer hochreflektierenden, diffusen oder spiegelnden Beschichtung versehen, die durch Reflexion der auftreffenden Sonnenstrahlung verhindert, dass sich die Probenkammer 2 erwärmt. Die Innenwände der Probenkammer 2 sind mit einer diffus reflektierenden (weißen) Beschichtung versehen, die das zur Messung einfallende Licht, sofern es nicht direkt auf Pflanzenblätter 13 trifft, möglichst homogen in der Probenkammern 2 verteilt und auf die Blätter 13 lenkt.

Mit dem als eine Art Strahlungsschalter dienenden Verschluss 4, beispielsweise einem aus der Phototechnik bekannten Kameraverschluss, kann möglichst schnell von "Probenkammer abgedunkelt" auf "Probenkammer lichtgeflutet" umgeschaltet werden. Zur Strahlungssammlung soll möglichst viel Sonnenlicht in die Probenkammer 2 des Messkopfes 1 gebracht werden. Als weitere Funktionen werden eine Filterung der einfallenden Strahlung, deren gleichmäßige Verteilung in der Probenkammer 2 sowie eine Synchronisierung mit der Messung durchgeführt.

Geeignete optische Filter sind kommerziell verfügbar in Standardgrößen mit einem Durchmesser von 12,5mm, 25mm und 50mm. Die Synchronisierung des Verschlusses 4 mit der Messung erfolgt mittels bekannter elektronischer Mittel. Um möglichst viel Sonnenlicht in die Probenkammer 2 zu bringen, sind die Öffnung A (Apertur) und/oder der Öffnungswinkel $\Omega$ groß zu machen, da der Strahlungsdurchsatz E (Etendue) eines optischen Systems definiert ist als:

$$E = A \cdot \Omega$$

Es muss möglichst viel direkte Sonnenstrahlung in die Probenkammer 2 gebracht werden; diffuse Sonnenstrahlung (Himmelslicht) allein ist nicht ausreichend. Dies wird erreicht, indem zur Strahlungsmessung eine Sammeloptik 8, beispielsweise ein Super-Weitwinkelobjektiv (Fischauge) mit einem Öffnungswinkel von bis zu 180° verwendet wird. Es kann dazu das einfachste System mit hoher Transmission insbesondere im Wellenlängenbereich unterhalb von 670nm verwendet werden, da keine optische Abbildung erforderlich ist, sondern nur die Strahlung zu übertragen ist.

Als Alternative kann die Öffnung der Probenkammer 2 seitlich in der Kuppel 3 untergebracht sein, so dass deren Normale einen Winkel von beispielsweise 45° mit der Rohrmittenachse bildet. Bei einer Messung wird diese seitliche Öffnung der Sonne zugewandt. Dann reicht zur Strahlungssammlung ein Objektiv mit kleinerem Öffnungswinkel von beispielsweise 90° aus.

Die einfallende Strahlung soll die Probenkammer 2 und vor allem die dort befindlichen Pflanzen(teile) 13 möglichst gleichmäßig beleuchten. Dies wird mittels eines optischen Diffusors 10 im Zusammenwirken mit den diffus reflektierenden Wänden der Probenkammer 2 erreicht. Der unter dem Filter 5 bzw. dem Verschluss 4 vorgesehene Diffusor 10 ist so ausgebildet und angeordnet, dass er die einfallende Strahlung zu den Wänden der Probenkammer 2 umlenkt und verhindert, dass diese direkt auf Pflanzenblätter 13 trifft. An den Wänden der Kammer 2 wird die Strahlung einmal oder auch öfter reflektiert und so gestreut, dass sie von allen Seiten auf die Pflanzen/teile 13 auftrifft. In der Probenkammer 2 entsteht eine gleichförmige Leuchtdichte (Strahldichte), ähnlich wie in einer sogenannten Ulbrichtkugel. Das führt zu einer gleichmäßigen Beleuchtung von vielen Blättern/ Blattteilen 13. Die Messung erfasst dann einen Mittelwert der Fluoreszenz aller beleuchteten Pflanzen(teile) 13 und ist daher als repräsentativ anzusehen.

Der Diffusor 10 kann als einfache Scheibe ausgebildet sein, die unter einen Winkel von beispielsweise 45° zur Rohrmittenachse im Strahlengang steht und diesen vollständig ausfüllt. (Wenn der Strahlengang einen kreisförmigen Querschnitt hat, ist die Diffusorscheibe elliptisch geformt). In diesem Fall wird die einfallende Strahlung zunächst nur zu einer Seite der Innenwände gelenkt. Der Diffusor 10 kann, wie in Fig.1 dargestellt, auch als Kegel ausgebildet sein, dessen Symmetrieachse in der optischen Achse des Objektivs 8 liegt, dessen Spitze zum Objektiv 8 weist und dessen Basis gleich dem Durchmesser des einfallenden Strahlenbündels ist. Auf diese Weise wird die einfallende Strahlung ringsum auf die Kammerwände gelenkt.

Der Diffusor 10 kann auch aus mehreren Segmenten zusammengesetzt sein, die unterschiedlich gestaltet und beispielsweise auch teilweise spiegelnd reflektieren. Damit ist ein optischer Separator geschaffen, der verhindert, dass die abgelenkte Strahlung direkt in den Messkopf 1 zur Strahlungssammlung der nachstehend näher beschriebenen Messeinheit 9 (Fig.2) fällt und dort von dem Filter eventuell absorbiert wird. Die Probenkammer 2, die Sammeloptik 8 und der Diffusor 10 sind in jedem Falle so zu dimensionieren, dass kein Bauelement die zu untersuchenden Pflanzen 13 abdeckt. Als Diffusor 10 kann auch ein Element in Form einer Milchglasscheibe verwendet werden, beispielsweise eine dünne Platte aus Teflon (eingetragene Marke). Dieses Element kann als Fenster in die Öffnung der Kuppel 3 der Probenkammer 2 eingesetzt werden, prinzipiell aber an jeder Stelle im Strahlengang vorgesehen sein.

Alternativ kann für eine weniger lichtstarke Beleuchtungseinrichtung auf die Sammeloptik 8 verzichtet werden. Statt dessen sind nur eine Öffnung, das Eintrittsfilter 5, der als Beleuchtungsschalter dienende Verschluss 4 (Kameraverschluss) und ein Diffusor 10 mit den vorstehend beschrieben Eigenschaften vorgesehen. Als Diffusor 10 ist eine Teflonscheibe besonders geeignet, die gleichzeitig die Probenkammer 2 nach außen abschließt. Dabei sollte die Öffnung möglichst groß sein. Für eine preiswerte Alternative kommen kommerziell erhältliche Kameraverschlüsse mit größtmöglicher Öffnung in Frage. Diffusor 10, Filter 5, Verschluss 4 sind möglichst flach auszubilden, damit ein großer Öffnungswinkel erreicht wird.

Als Referenzstrahlungssensor 6 ist eine einfache Photodiode vorgesehen, die einen großen Gesichtsfeldwinkel aufweist. Ein optisches Kurzpassfilter 11 lässt nur Strahlung im Bereich der gefilterten einfallenden Strahlung auf die Photodiode, nicht aber Fluoreszenzstrahlung; vorteilhafterweise hat daher das Kurzpassfilter 11 die gleiche Transmissionscharakteristik wie das Eintrittsfilter 5 zum Filtern der Sonnenstrahlung. Eine Referenzstrahlungseinheit 12 ist so in die Probenkammer 2 integriert, dass sie Strahlung von den Innenwänden empfängt. So ist einerseits gewährleistet, dass Schwankungen der einfallenden Strahlung registriert werden, und andererseits die homogen verteilte Strahlung und nicht etwa direktes Sonnenlicht erfasst wird.

In Fig.2 ist die erfindungsgemäße Anordnung in Draufsicht wiedergegeben. Neben der Probenkammer-Öffnung mit der Optik 8 zur Strahlensammlung sind die Referenzstrahlungseinheit 12 und die optische Messeinheit 9 dargestellt.

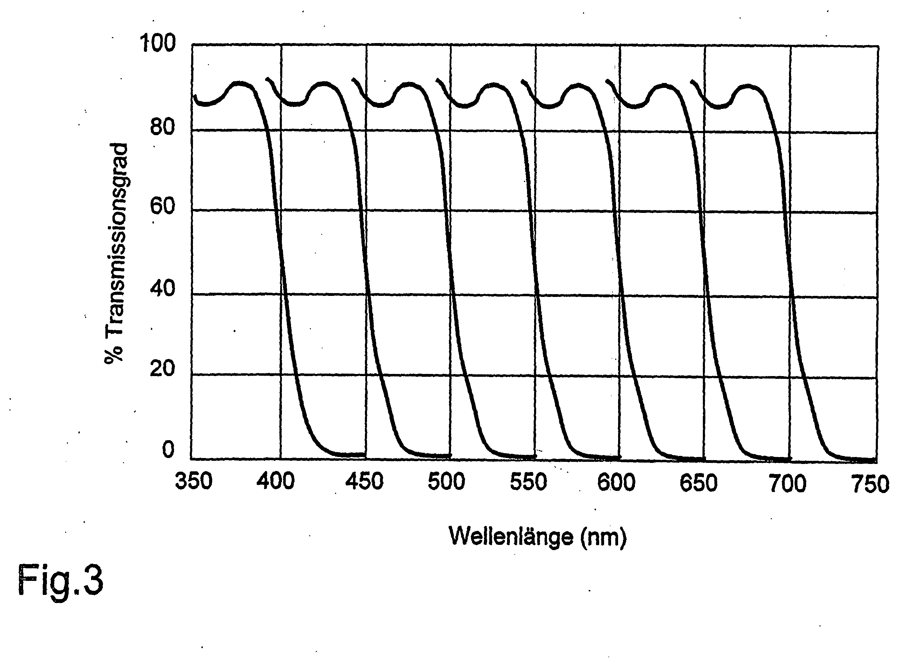

Fig.3 verdeutlicht, dass Kurzpassfilter mit jeder gewünschten Kantenwellenlänge - das ist die Wellenlänge eines Filters, bei der der Übergang von Durchlass zu Sperre erfolgt (Filterflanke) - herstellbar sind und standardmäßig mit einer Kantenwellenlänge von 670nm erhältlich sind. Bei Wellenlängen kürzer als 670nm liegen Bereiche starker Strahlungsabsorption der Pflanzen. Ein solches Filter dient somit als Eintrittsfilter 5 zur Probenkammer 2. Der Durchlassbereich kann weiter oder enger gewählt oder mit einem Bandpassfilter auf ein bestimmtes Wellenlängenband eingeschränkt werden. Das Filter ist im Inneren der Sammeloptik, beispielsweise zwischen einem Fischaugenobjektiv 8 und dem Verschluss 4 positioniert. Als Objektiv kann auch Glas verwendet werden, das ultraviolette Strahlung überträgt (z.B. UG5 oder UG 11 von Schott). Das Kurzpassfilter 11 ist vorzugsweise als Reflexionsfilter ausgelegt, welches sich im Unterschied zu einem Absorptionsfilter nicht erwärmt. Auf diese Weise ist verhindert, dass in der Probenkammer 2 zuviel Wärme freigesetzt wird.

Die Messeinheit 9 weist je nach Ausführungsform ein oder zwei optische Messkanäle auf, die entweder im roten Fluoreszenzbereich für die dynamische Messung (Kautsky) oder im hell- und dunkelroten Bereich für die statische oder kombinierte Messung liegen.

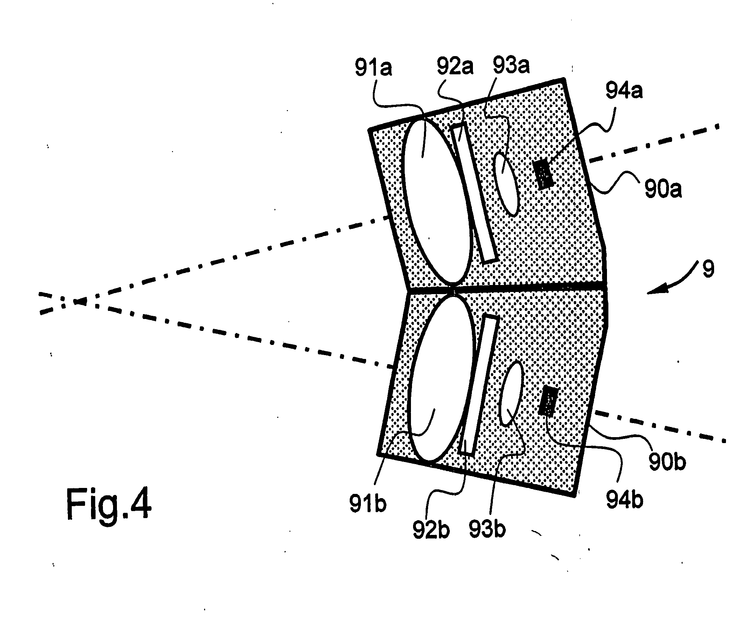

In Fig.4 ist eine Messeinheit 9 mit den Komponenten für zwei optische Messkanäle 90a, 90b dargestellt. Der Aufbau ähnelt dem der Sammeleinrichtung für Sonnenlicht, wobei hier kein Verschluss benötigt wird. Die Strahlung wird wieder mittels eines einfachen (Super-)Weitwinkelobjektivs 91a, 91b gesammelt und nach Passieren eines optischen Bandpassfilters 92a, 92b auf einen Strahlungsdetektor 94a, 94b fokussiert. Die Weitwinkelobjektive 91a, 91b erfassen den gesamten Halbraum (180°) und somit möglichst viel der Fluoreszenzstrahlung. Das/die optische/n Bandpassfilter 92a, 92b sind in Spektralbereich und Durchlassbreite an das zu erfassende spektrale Band (rot, hellrot, dunkelrot) angepasst.

Die Strahlungsdetektoren 94a, 94b sind einfache Siliziumdioden oder PIN-Dioden. Aufwendigere Detektoren sind Photomultiplier. Ein kommerzielles Weitwinkelobjektiv 91a, 91b erzeugt ein Bild in seiner Bildebene. Zur Fokussierung der Strahlung auf den/die Detektor/en dient eine Sammellinse 93a, 93b. Statt der Weitwinkelobjektive 91a, 91b können auch nur kurzbrennweitige Sammellinsen möglichst großer Apertur verwendet werden. Bei ausreichend starker Fluoreszenzstrahlung genügt es, die Strahlung direkt mit der Detektionseinheit (Photodiode, Photomultiplier) zu sammeln.

Für einen möglichst direkten Blick auf die Pflanzen und einen großen Teil der Innenwände der Probenkammer ist die Messeinheit 9 im oberen Teil der Probenkammer 2 (oberhalb der Pflanzen) vorgesehen. Auf diese Weise erfasst die Messeinheit 1 sowohl die Fluoreszenzstrahlung direkt als auch den an den Wänden gestreuten Anteil.

Gegebenenfalls können bei der Strahlungsmessung beispielsweise auch mechanische Strahlungszerhacker verwendet werden.

Für alle optischen Systeme können auch preiswerte Plastiklinsen verwendet werden, vorzugsweise solche, die auch ultraviolette Strahlung übertragen. Geeignet ist Acrylglas (Plexiglas), welches mit einer harten Schutzschicht gegen Verkratzen versehen ist.

Die Detektorsignale werden in bekannter Weise digitalisiert, im Mikroprozessor gespeichert und in diesem auch ausgewertet. Aus den Messwerten ergibt sich der Düngebedarf über die bereits angesprochenen pflanzenspezifischen Kalibrierdaten, die im Mikroprozessorsystem gespeichert sind. Diese werden in standardisierten Versuchsreihen mit repräsentativen Pflanzen bei kontrolliertem Düngermangel gemessen. Für jede Pflanzenart, die mit dem System begutachtet werden soll, wird ein Satz von Kalibrierdaten ermittelt und gespeichert. Über eine in den Zeichnungen nicht näher dargestellte, bekannte Eingabe- oder Einstellienheit wird das System auf die jeweilige Pflanzenart eingestellt.

Die Kalibrierung erfolgt, indem stufenweise die Düngergaben in einem neutralen Pflanzsubstrat zwischen 0% und 100% eingestellt werden. Null entspricht dabei keiner Düngung, 100% entspricht der Sättigung, d.h. die Pflanze findet so viel Dünger vor, wie sie aufnehmen kann. Die Stufung kann beispielsweise in 5% Schritten o. ä. erfolgen. Beispielsweise werden 20 Substrate hergestellt, in denen jeweils eine größere Zahl von Pflanzen eingesät und herangezogen werden, die ansonsten gleichen Bedingungen (Wasser, Licht, Temperatur) ausgesetzt sind. Die Konzentration der Düngemenge im Substrat wird regelmäßig überwacht und konstant gehalten. Dynamische und statische Fluoreszenzmessungen über einen längeren Zeitraum liefern die benötigten Kalibrierdaten für verschiedene Stadien des Pflanzenwachstums.

Die nachfolgend beschriebene Ausführungsform ist insbesondere einfach und preiswert herzustellen. Sie hat das vorstehend beschriebene Gehäuse mit der Probenkammer. Die Öffnung für den Strahlungseintritt ist mit einer Scheibe aus Teflon (eingetragene Marke) verschlossen, die als Fenster gegen Verschmutzung des Inneren sowie als Diffusor dient. Unmittelbar unter diesem Fenster ist ein optisches Kurzpassfilter angebracht, dem ein Kameraverschluss nachgeordnet ist. Das Messsystem besteht aus zwei Photodioden in Standardgehäusen, wobei als Fenster jeweils optische Hellrot(hr)- bzw. Dunkelrot(dr)- Bandpassfilter verwendet werden, die über einen großen Öffnungswinkel verfügen, nahe beieinander montiert sind und deren optische Achsen so ausgerichtet sind, dass sie sich in der Mitte der Probenkammer schneiden.

Bezugszeichenliste

| | |
|---|---|
| 1 | kreiszylinderförmiges Rohr |
| 2 | Probenkammer |
| 3 | Kuppel |
| 4 | Verschluss |
| 5 | Filter |
| 6 | Referenzstrahlungssensor |
| 7 | ringförmiger Ansatz/Bund |
| 8 | Sammeloptik |
| 9 | Messeinheit |
| 10 | optischer Diffusor |
| 11 | Kurzpassfilter |
| 12 | Referenzstrahlungsmesseinheit |
| 13 | Pflanzen |
| 14 | Erdboden |

| | |
|---|---|
| 90a, b | Messkanal |
| 91a, b | (Super)-Weitwinkelobjektiv |
| 92a, b | optisches Bandpassfilter |
| 93a, b | Sammellinse |
| 94a, b | Strahlungsdetektor |

**Patentansprüche**

1. Verfahren zum Bestimmen des Düngerbedarfs in Gärten, Gärtnereien, Parkanlagen u.ä., wobei die folgenden Schritte durchgeführt werden:

   a) Für bestimmte Pflanzen werden unter kontrollierter Düngung Messreihen erstellt und daraus pflanzenspezifische Kalibrierdaten berechnet, die in einem Prozessor gespeichert sind.
   b) Pflanzen/teile, die eine bestimmte Zeitspanne an Dunkelheit adaptiert worden sind, werden zur Anregung von Photosynthese plötzlich/schlagartig einer Strahlung in Form von aktinischem Licht ausgesetzt.
   c) Die dunkel-adaptierte Fluoreszenz wird gemessen.
   d) In sehr kurzen Zeitabständen werden über einen vorgegebenen Zeitabschnitt jeweils die Fluoreszenzwerte gemessen, um deren Maximalwert zu finden und zu bestimmen.
   e) Nach Erreichen eines Gleichgewichtszustandes, wenn die Pflanzen/teile hell adaptiert sind, werden in längeren Zeitabständen über einen vorgegebenen Zeitabschnitt jeweils die Fluoreszenzwerte gemessen.

   f) Alle gemessenen Fluoreszenzwerte werden unter Bezugnahme auf die gespeicherten pflanzenspezifischen Kalibrierdaten ausgewertet.
   g) Es wird eine Düngeempfehlung berechnet und angezeigt.

2. Verfahren nach Anspruch 1, **dadurch gekennzeichnet, dass** zum Ausgleich von Leistungsschwankungen während eines Messabschnitts auf Referenzmessungen gestützte Korrekturen durchgeführt werden.

3. Einrichtung zur Durchführung des Verfahrens nach Anspruch 1, **gekennzeichnet durch** einen Messkopf mit
   einem zylinderförmigen Rohr (1), das an einem Ende **durch** eine etwa halbkugelförmige Kuppel (3) abgeschlossen ist, wobei Rohr (1) und Kuppel (3) aus im Spektralbereich von Sonnenlicht strahlungsundurchlässigem Material bestehen,
   einem bei einer Öffnung in der Kuppel (3) vorgesehenen, elektronisch gesteuerten Verschluss (4),
   einem Filter (5) sowie gegebenenfalls einer Sammeloptik (8), die dem Verschluss (4) vorgeschaltet sind, und einer Messeinheit (9).

4. Einrichtung nach Anspruch 3, **dadurch gekennzeichnet, dass** die Sammeloptik (8) in der Öffnung der Kuppel (3) vorgesehen ist.

5. Einrichtung nach Anspruch 4, **dadurch gekennzeichnet, dass** die Sammeloptik (8) ein Super-Weitwinkelobjektiv ist.

6. Einrichtung nach einem der Ansprüche 3 bis 5, **dadurch gekennzeichnet, dass** eine Öffnung im Zenit der Kuppel (3) oder seitlich so ausgebildet ist, dass deren Normale einen Winkel von etwa 45° zur Mittenachse des zylindrischen Rohrs (1) einschließt.

7. Einrichtung nach Anspruch 3, **dadurch gekennzeichnet, dass** im/am Rohr (1) des Messkopfs eine zum Messkopf-Inneren ausgerichtete Referenzstrahlung erfassende Einheit (12) mit Sensor (6) und Kurzpassfilter (11) vorgesehen ist.

8. Einrichtung nach einem der Ansprüche 3 bis 5, **dadurch gekennzeichnet, dass** dem Verschluss im Rohr (1) ein Diffusor (10) nachgeordnet ist.

9. Einrichtung nach Anspruch 8, **dadurch gekennzeichnet, dass** der Diffusor (10) die Form eines Kegels hat.

10. Einrichtung nach Anspruch 6, **dadurch gekennzeichnet, dass** der Diffusor (10) eine Scheibe ist.

11. Einrichtung nach Anspruch 10, **dadurch gekenn-**

**zeichnet, dass** eine Diffusor-Scheibe unter einem Winkel von 45° zur Mittenachse des Rohrs (1) ausgerichtet ist.

12. Einrichtung nach einem der Ansprüche 3 bis 6, **dadurch gekennzeichnet, dass** die Wandung des Rohrs (1) am offenen Rohrende spitz zuläuft und einen auf der Rohraußenseite umlaufenden ringförmigen Ansatz (7) hat, der als Anschlag für ein ausreichend tiefes Hindrükken des Rohrs (1) in den Erdboden (14) dient.

13. Einrichtung nach Anspruch 3, **dadurch gekennzeichnet, dass** Rohr (1) und Kuppel (3) des Messkopfes aus Metall oder schlagfestem, gegenüber Sonnenlicht resistentem Kunststoff bestehen.

14. Einrichtung nach Anspruch 3, **dadurch gekennzeichnet, dass** die Außenseite des Messkopfes eine diffuse oder spiegelnde hochreflektierende Beschichtung aufweist.

15. Einrichtung nach Anspruch 3, **dadurch gekennzeichnet, dass** auf der Innenseite des Messkopfes eine diffus reflektierende (weiße) Beschichtung aufgebracht ist.

16. Einrichtung nach Anspruch 3, **dadurch gekennzeichnet, dass** die Messeinheit (9) zwei optische Messkanäle (90a, 90b) aufweist.

17. Einrichtung nach Anspruch 16, **dadurch gekennzeichnet, dass** jeder der Messkanäle (90a, 90b) der Messeinheit (9) als Komponenten jeweils ein Super-Weitwinkelobjektiv (91a, 91b), ein dem Weitwinkelobjektiv nachgeordnetes Bandpassfilter (92a, 92b), eine Sammellinse (93a, 93b) sowie einen Strahlungsdetektor (94a, 94b) aufweisen.

**Claims**

1. A method for determining fertilizer requirements in gardens, nurseries, parks and the like, wherein the following steps are performed:

   a) establishing series of measurements for certain plants under controlled fertilization and calculating therefrom plant-specific calibration data stored in a processor;
   b) suddenly/abruptly exposing plants/parts of plants that have been adapted to darkness over a certain period to radiation in the form of actinic light to stimulate photosynthesis;
   c) measuring the darkness-adapted fluorescence;
   d) measuring respective fluorescence values for a predetermined period in very short intervals to find and determine their maximum value;
   e) measuring respective fluorescence values for a predetermined period in longer intervals after a balance condition has been reached when the plants/parts of plants are light-adapted;
   f) evaluating all measured fluorescence values with reference to the stored plant-specific calibration data;
   g) calculating and indicating a recommended fertilization.

2. The method of claim 1, **characterized in that** corrections based on reference measurements are made to compensate for performance variations during a measuring phase.

3. Means for executing the method of claim 1, **characterized by** a measuring head comprising
   a cylindrical tube (1) closed at one end by an approximately semispherical dome (3), the tube (1) and the dome (3) being made of a material impermeable to radiation in the spectral range of sunlight,
   an electronically controlled closure (4) provided at an opening in the dome (3),
   a filter (5) and, if applicable, collecting optics (8) arranged upstream of the closure (4), and
   a measuring unit (9).

4. The means of claim 3, **characterized in that** the collecting optics (8) is provided in the opening of the dome (3).

5. The means of claim 4, **characterized in that** the collecting optics (8) is a super wide-angle lens.

6. The means of one of claims 3 to 5, **characterized in that** an opening is formed in the vertex of the dome (3) or laterally such that its normal includes an angle of approximately 45° with the centre axis of the cylindrical tube (1).

7. The means of claim 3, **characterized in that** a unit (12) comprising a sensor (6) and a short pass edge filter (11) is provided in/at the tube (1) of the measuring head, the unit detecting reference radiation directed towards the interior of the measuring head.

8. The means of one of the claims 3 to 5, **characterized in that** a diffuser (10) is arranged downstream of the closure in the tube (1).

9. The means of claim 8, **characterized in that** the diffuser (10) is cone-shaped.

10. The means of claim 6, **characterized in that** the diffuser (10) is a disk.

11. The means of claim 10, **characterized in that** a diffuser disk is arranged under an angle of 45° to the central axis of the tube (1).

12. The means of one of claims 3 to 6, **characterized in that** the wall of the tube (1) tapers at the open end of the tube and comprises an annular tab (7) extending circumferentially around the outer side of the tube, said tab acting as an abutment for pushing the tube (1) sufficiently deep into the ground (14).

13. The means of claim 3, **characterized in that** the tube (1) and the dome (3) of the measuring head are made of metal or an impact-resistant plastic material resistant to sunlight.

14. The means of claim 3, **characterized in that** the outer side of the measuring head has a diffuse or specular highly reflective coating.

15. The means of claim 3, **characterized in that** a diffuse reflective (white) coating is applied on the inner side of the measuring head.

16. The means of claim 3, **characterized in that** the measuring unit (9) comprises two optical measuring channels (90a, 90b).

17. The means of claim 16, **characterized in that** each of the measuring channels (90a, 90b) of the measuring unit (9) has as its respective components a super wide-angle objective (91a, 91b), a band pass filter (92a, 92b) downstream of the wide-angle objective, a converging lens (93a, 93b), as well as a radiation detector (94a, 94b).


**Revendications**

1. Procédé pour déterminer le besoin en engrais dans des jardins, des exploitations horticoles, des parcs, et analogues, dans lequel on exécute les étapes suivantes :

   a) pour certaines plantes, on établit des séries de mesures sous apport d'engrais contrôlé et on calcule à partir de celles-ci des données de calibrage spécifiques aux plantes, qui sont mémorisées dans un processeur ;
   b) des plantes/parties de plantes, qui ont été adaptées à l'obscurité pendant une période temporelle déterminée sont soudainement/brutalement exposées à un rayonnement sous la forme de lumière actinique pour exciter la photosynthèse ;
   c) on mesure la fluorescence adaptée à l'obscurité ;
   d) à des intervalles temporels très courts, on mesure pendant une période prédéterminée les valeurs de fluorescence respectives afin de trouver et de déterminer leur valeur maximale ;
   e) après avoir atteint un état d'équilibre, quand les plantes/parties de plantes sont adaptées à la clarté, on mesure, à des écarts temporels plus longs et pendant une période temporelle prédéterminée, des valeurs de fluorescence respectives ;
   f) toutes les valeurs de fluorescence mesurées sont évaluées par référence aux données de calibrage mémorisées spécifiques aux plantes ;
   g) on calcule et on affiche une recommandation d'engrais.

2. Procédé selon la revendication 1, **caractérisé en ce que**, pour compenser des fluctuations de performances pendant un segment de mesure, on exécute des corrections qui s'appuient sur des mesures de référence.

3. Système pour mettre en oeuvre le procédé selon la revendication 1, **caractérisé par** une tête de mesure comprenant :

   un tube de forme cylindrique (1) qui est refermé à une extrémité par une coupole (3) de forme hémisphérique, ledit tube (1) et ladite coupole (3) étant réalisés en un matériau perméable aux rayonnements dans la plage spectrale de la lumière solaire,
   un obturateur (4) prévu dans une ouverture dans la coupole (3) et commandé électroniquement,
   un filtre (5) et le cas échéant un système optique de concentration (8) qui sont prévus en amont de l'obturateur (4), et une unité de mesure (9).

4. Système selon la revendication 3, **caractérisé en ce que** le système optique de concentration (8) est prévu dans l'ouverture de la coupole (3).

5. Système selon la revendication 4, **caractérisé en ce que** le système optique de concentration (8) est un objectif à un super grand angle.

6. Système selon l'une des revendications 3 à 5, **caractérisé en ce qu'**une ouverture est réalisée au zénith de la coupole (3) ou latéralement de telle façon que sa normale définit un angle d'environ 45° par rapport à l'axe médian du tube cylindrique (1).

7. Système selon la revendication 3, **caractérisé en ce qu'**il est prévu dans/sur le tube (1) de la tête de mesure une unité (12) avec capteur (6) et filtre (11) à courte bande passante, pour capter le rayonnement de référence orienté vers l'intérieur de la tête de mesure.

8. Système selon l'une des revendications 3 à 5, **ca-**

**ractérisé en ce qu'**un diffuseur (10) est agencé à la suite de l'obturateur dans le tube (1).

9. Système selon la revendication 8, **caractérisé en ce que** le diffuseur (10) a la forme d'un cône.

10. Système selon la revendication 6, **caractérisé en ce que** le diffuseur (10) est un disque.

11. Système selon la revendication 10, **caractérisé en ce qu'**un disque diffuseur est orienté sous un angle de 45° par rapport à l'axe médian du tube (1).

12. Système selon l'une des revendications 3 à 6, **caractérisé en ce que** la paroi du tube (1) se termine par une pointe à l'extrémité ouverte du tube et comporte un talon annulaire (7) périphérique sur la face extérieure du tube, qui sert de butée pour un enfoncement suffisamment profond du tube (1) dans le sol (14).

13. Système selon la revendication 3, **caractérisé en ce que** le tube (1) et la coupole (3) de la tête de mesure sont en métal ou en matière plastique résistante aux chocs, et résistante vis-à-vis de la lumière solaire.

14. Système selon la revendication 3, **caractérisé en ce que** la face extérieure de la tête de mesure comprend un revêtement hautement réflecteur à diffusion ou à réflexion.

15. Système selon la revendication 3, **caractérisé en ce qu'**un revêtement (blanc) à réflexion diffuse est appliqué sur la face intérieure de la tête de mesure.

16. Système selon la revendication 3, **caractérisé en ce que** l'unité de mesure (9) comprend deux canaux de mesure optique (90a, 90b).

17. Système selon la revendication 16, **caractérisé en ce que** chacun des canaux de mesure (90a, 90b) de l'unité de mesure (9) comprend, à titre de composant, un objectif à super grand angle (91a, 91b), un filtre passe-bande (92a, 92b) à la suite de l'objectif à grand angle, une lentille collectrice (93a, 93b), ainsi qu'un détecteur de rayonnement (94a, 94b).

Fig.1

EP 1 483 951 B1

Fig.2

Fig.3

% Transmissionsgrad

Wellenlänge (nm)

Fig.4

EP 1 483 951 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19723770 A1
- DE 4446481 A1
- DE 19950396 A1
- DE 10148746 A1
- DE 19860306 A1
- DE 10002880 C1
- DE 4427438 A1
- US 5130545 A